(19)

Europäisches
Patentamt
European
Patent Office
Office européen
des brevets

(11) **EP 2 554 515 A1**

(12) **EUROPEAN PATENT APPLICATION**
published in accordance with Art. 153(4) EPC

(43) Date of publication:
**06.02.2013 Bulletin 2013/06**

(51) Int Cl.:
*C01B 31/04* (2006.01)     *H01M 4/36* (2006.01)
*H01M 4/587* (2010.01)

(21) Application number: **11765477.2**

(22) Date of filing: **28.03.2011**

(86) International application number:
**PCT/JP2011/057539**

(87) International publication number:
**WO 2011/125577 (13.10.2011 Gazette 2011/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010 JP 2010080874**

(71) Applicants:
• **Nippon Steel & Sumitomo Metal Corporation
Tokyo 100-8071 (JP)**
• **Chuo Denki Kogyo Co., Ltd.
Myoko-shi
Niigata 949-2193 (JP)**

(72) Inventors:
• **YAMAMOTO Hiroshi
Osaka-shi
Osaka 541-0041 (JP)**
• **NAGATA Tatsuo
Osaka-shi
Osaka 541-0041 (JP)**

• **NISHIHARA Katsuhiro
Osaka-shi
Osaka 541-0041 (JP)**
• **NEGI Noriyuki
Osaka-shi
Osaka 541-0041 (JP)**
• **YAUCHI Akihiro
Myoko-shi
Niigata 949-2193 (JP)**
• **FUJIWARA Tooru
Myoko-shi
Niigata 949-2193 (JP)**

(74) Representative: **Jackson, Martin Peter et al
J A Kemp
14 South Square
Gray's Inn
London WC1R 5JJ (GB)**

(54) **MODIFIED NATURAL GRAPHITE PARTICLE AND METHOD FOR PRODUCING SAME**

(57)     Modified natural graphite particles intended for forming a negative electrode material for a nonaqueous electrolyte secondary battery are characterized by having a circularity of at least 0.93 and at most 1.0 and a surface roughness of at most 1.5% with respect to the length of the particles. These modified natural graphite particles are obtained by a manufacturing method including a step of applying an impact force to natural graphite particles for pulverization and spheroidization to obtain intermediate particles having a circularity of at least 0.93 and at most 1.0, and a step of carrying out surface smoothing of the resulting intermediate particles by mechanical grinding treatment to obtain the modified natural graphite particles.

Fig. 1

**Description**

Technical Field

This invention relates to modified natural graphite particles for use in a negative electrode of a nonaqueous electrolyte secondary battery and particularly to modified natural graphite particles for use in a negative electrode of a lithium ion secondary battery.

In the present invention, a negative electrode active material is one of the materials constituting a negative electrode of a nonaqueous secondary battery. It receives and discharges positively charged particles (such as lithium ions). A negative electrode plate, which is a sheet-like negative electrode member, is prepared by forming a coated layer of a negative electrode mixture, which is a mixture containing this negative electrode active material and a binder, on a current collector made from an electrically conductive substance and subjecting the coated layer to a forming process such as compression or compaction.

In the present invention, modified natural graphite particles refer to particles of natural graphite such as flake graphite which have been processed for modifying their shape.

In the present invention, a carbonaceous material is a material which predominantly comprises carbon. For example, it is a material obtained by heating an organic compound such as pitch for carbonization.

Background Art

A negative electrode plate for a nonaqueous electrolyte secondary battery is prepared by coating a current collector with a negative electrode mixture which is formed by mixing at least a negative electrode active material and a binder. The binder serves to allow particles of the negative electrode active material to adhere to each other or to the current collector. It is desirable for the binder to have a high efficiency of utilization as long as it ensures adhesion. The negative electrode active material which is used is a material capable of occluding cations (positive ions) such as lithium ions therein at the stage of charging.

In a lithium ion secondary battery in which a graphite substance is used as a negative electrode active material, the properties of the graphite substance have a great effect on battery performance. Graphite substances include natural graphite and artificial graphite. Because natural graphite is less expensive and has a lower cost even if post processing is carried out thereon, it is suitable for lowering the manufacturing costs of a battery.

Among types of natural graphite, flake natural graphite and vein natural graphite have a high degree of graphitization, which is indicative of crystallinity of graphite, and are therefore expected to have a high charge and discharge capacity when used as a negative electrode active material. However, particles of these types of natural graphite are flake-shaped (plate-shaped), so they have shortcomings such as that they are oriented when applied to an electrode, they have a large initial irreversible capacity, and they have a tendency to have a low packing density. Accordingly, in order to obtain a high charge and discharge capacity, it is necessary to perform shape modification of flake-shaped natural graphite particles.

Patent Document 1 and Non-Patent Document 1 disclose a method for modifying the shape of graphite particles in which Mechano Fusion (registered trademark) is used to modify the particle shape into a disc shape. Patent Document 2 discloses a method for spheroidizing graphite particles using a jet mill. Patent Documents 3 and 4 disclose a method for spheroidizing graphite particles using a pin mill.

Prior Art Documents

Patent Documents

Patent Document 1: JP 2007-169160 A
Patent Document 2: JP 11-263612 A
Patent Document 3: JP 2003-238135 A
Patent Document 4: JP 2008-24588 A

Non-Patent Documents

Non-Patent Document 1: Ohzeki, Tanso (Carbon), 2005, No. 217, pp. 99 - 103

Disclosure of Invention

In Patent Document 1 and Non-Patent Document 1, the particle shape which is formed is disc-shaped and not spherical. In Patent Documents 2 - 4, a spherical particle shape is obtained, but the particles have a surface which has been roughened by impact.

The object of the present invention is to provide modified natural graphite particles which are suitable as a negative electrode material for nonaqueous electrolyte secondary batteries by making it possible to perform spheroidization and surface smoothing of natural graphite particles.

In one embodiment, the present invention provides modified natural graphite particles characterized by having a circularity of at least 0.93 to at most 1.0 and having a surface roughness of at most 1.5% with respect to the longest axis of the particles.

Circularity and surface roughness are expressed by the following equations.

$$\text{Circularity} = (\text{Perimeter of a circle having the same area as an image of a particle}) / (\text{Perimeter of the image of the particle})$$

$$\text{Surface roughness} = [(\text{Maximum value of the change in the particle radius per 1 degree of a particle}) / (\text{Length of longest axis of the particle})]$$

The perimeter of a circle having the same area as an image of a particle and the perimeter of the image of the particle are determined by image processing of an image of a particle obtained by measuring the shape of the particle.

The particle radius of a particle is found as the distance from the center of the particle, which is defined as the point where the longest axis of the particle is divided into two equal parts, to each point on the periphery of the particle. The change per 1 degree in the particle radius is the absolute value, and the maximum value thereof refers to the maximum amount of change per 1 degree measured around the entire periphery of the particle.

The above-described modified natural graphite particles preferably have a true specific gravity of at least 2.25, a tap density of at least 1.0 $g/cm^3$ and at most 1.4 $g/cm^3$, and a linseed oil absorption of at least 20 $cm^3/100$ g and at most 50 $cm^3/100$ g.

In another embodiment, modified natural graphite particles according to the present invention comprise the above-described modified natural graphite particles and a carbonaceous material adhering to at least a portion of the surface of the particles.

In still another embodiment, the present invention provides a negative electrode material for a lithium ion secondary battery characterized by comprising the above-described modified natural graphite particles.

According to yet another embodiment, the present invention is a method for manufacturing the above-described modified natural graphite particles, comprising a step of imparting an impact force to natural graphite particles to carry out pulverization and spheroidization, thereby obtaining intermediate particles having a circularity of at least 0.93 and at most 1.0, and a step of carrying out surface smoothing on the intermediate particles by mechanical grinding treatment to obtain the modified natural graphite particles.

According to still yet another embodiment, the present invention is a method for manufacturing the above-described modified natural graphite particles having a carbonaceous material comprising a step of imparting an impact force to natural graphite particles to carry out pulverization and spheroidization, thereby obtaining intermediate particles having a circularity of at least 0.93 and at most 1.0, a step of carrying out surface smoothing on the intermediate particles by mechanical grinding treatment, and a step of adhering a carbonaceous material to at least a portion of the surface of the particles which underwent the surface smoothing treatment, thereby obtaining modified natural graphite particles.

Modified natural graphite particles for a nonaqueous electrolyte secondary battery having the above-described characteristics are prepared by subjecting natural graphite particles to spheroidization and surface smoothing, and hence they have an increased packing density and provide adequate adhesion between a negative electrode mixture and a current collector even when using a small amount of a binder.

Brief Explanation of the Drawings

Figure 1 is a diagram explaining modified natural graphite particles according to the present invention with reference to manufacturing steps.

Figure 2 is a diagram explaining the surface shape of intermediate particles obtained in the course of a manufacturing process for modified natural graphite particles according to the present invention.
Figure 3 is a diagram explaining the surface shape of modified natural graphite particles according to the present invention.

Modes for Carrying Out the Invention

Below, embodiments of the present invention will be explained in detail while referring to the drawings. The dimensions, numbers, temperatures, and the like which are explained below are examples for the purpose of explanation and can be suitably varied.

Below, a pulverizer will be described as an apparatus for pulverization and spheroidization by imparting an impact force to untreated natural graphite particles (referred to below as an impact-type pulverizing apparatus), but it is also possible to use other suitable apparatuses such as a jet mill, a pin mill, a Mechanohybrid (registered trademark), and a Hybridization (registered trademark) system. A Mechano Fusion (registered trademark) system will be explained as a mechanical grinding apparatus used for surface smoothing of intermediate particles obtained by the above-described spheroidization, but other suitable apparatuses can also be used.

Below, the same elements are indicated by the same symbols in all of the drawings, and a repeated explanation will be omitted. In the explanation in this description, previously mentioned symbols will be used as necessary.

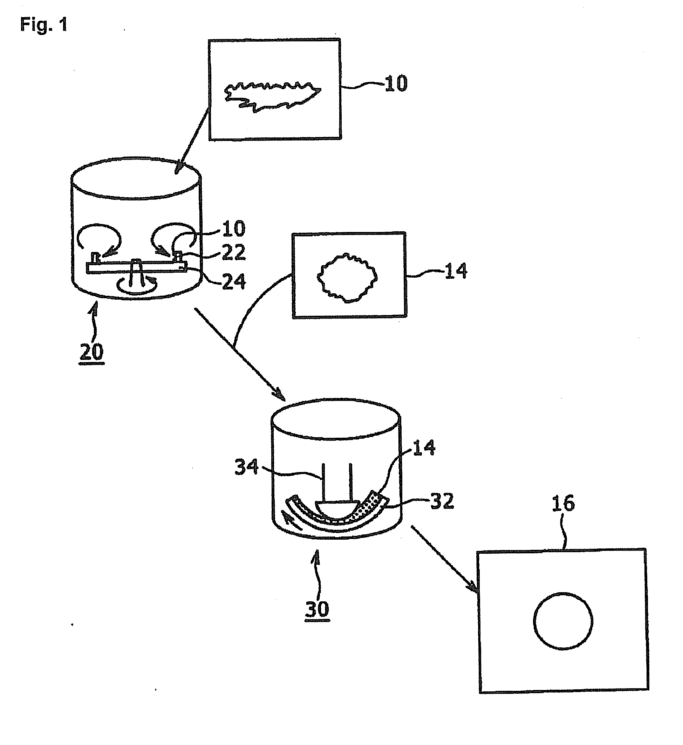

Figure 1 is an explanatory view showing the manufacturing steps for modified natural graphite particles 16 according to the present invention. Untreated natural graphite particles 10 which are used as a raw material are subjected to shape modification treatment in an impact-type pulverizing apparatus 20 to form intermediate particles 14. The intermediate particles 14 are then subjected to further shape modification treatment in a mechanical grinding apparatus 30 to obtain modified natural graphite particles 16.

The untreated natural graphite particles 10 used as a raw material are untreated flake-shaped (plate-shaped) natural graphite particles. Based on their outer appearance and properties, natural graphite particles are classified as flake graphite, vein graphite, and amorphous graphite. Flake graphite and vein graphite are nearly completely crystalline, while amorphous graphite has a lower crystallinity. The quality of natural graphite is determined primarily by the place of origin and the vein from which it is derived. Flake graphite is produced in locations such as Madagascar, China, Brazil, the Ukraine, and Canada. Vein graphite is produced primarily in Sri Lanka. Amorphous graphite is produced in locations such as the Korean Peninsula, China, and Mexico. Amorphous graphite generally has a small particle diameter and is considered to have a low purity, in light of factors such as the degree of graphitization and the low level of impurities. Therefore, among different types of natural graphite, it is preferable to use flake graphite or vein graphite as a raw material. Here, flake graphite having a true specific gravity, which indicates its density, of at least 2.25 is used.

Flake graphite has crystals which have a plurality of stacked layers of hexagonal mesh planes (AB planes) in which carbon atoms form a regular network structure in a plane and have a thickness in the c-axis direction which is perpendicular to the AB plane.

Because the binding force between the stacked AB planes (Van der Walls force) is far smaller than the binding force (of covalent bonds) in the plane direction within the AB planes, peeling occasionally occurs between the AB planes. Accordingly, the thickness of stacking is small compared to the amount of spreading of the AB planes. As a result, flake graphite exhibits an overall flake-like shape.

There is no particular upper limit on the particle size of the untreated material 10 which is used as a raw material. However, it is preferable to previously perform rough pulverization of the raw material to an average particle diameter of at most 5 mm. It is particularly preferable for the average particle diameter of the raw material to be at most 200 $\mu$m. Here, the average particle diameter is the median diameter in a particle size distribution based on volume.

An example of the circularity of particles of the untreated material 10 used as a raw material is around 0.84. The circularity is an index of the spheroidization of a particle when it is projected on a two-dimensional plane to obtain a planar image. The circularity is defined by the following equation.

$$\text{Circularity} = (\text{Perimeter of a circle having the same area as an image of a particle})/(\text{Perimeter of the image of the particle})$$

Namely, when the image of a particle is a perfect circle, its circularity is 1. If the particle can be viewed three-dimensionally, as the circularity increases, the actual spheroidization of the particle advances to an extent which is greater than that predicted from the value of circularity.

The impact-type pulverizing apparatus 20 is an apparatus in which a raw material is impacted on a plurality of pins 22 provided on a rotating roller 24 so as to spheroidize the raw material by the impact force. Specifically, a raw material in the form of graphite particles is fed to the impact-type pulverizing apparatus 20. The raw material can be fed by carrying the particles in a gas stream of air or the like. The graphite particles which were fed are allowed to contact with the roller 24 which has a plurality of rotating pins 22 by centrifugal force. The graphite particles are repeatedly impacted by the plurality of pins 22 on the rotating roller 24, and the graphite particles are spheroidized by the repeated impacts. As such an impact-type pulverizing apparatus 20, a pulverizing apparatus manufactured by Hosokawa Micron Corporation (ACM Pulverizer, Model ACM-10A) or the like can be used.

Here, the case will be explained in which an untreated material 10 of natural graphite particles is used as a raw material. The untreated material 10 is fed to the impact-type pulverizing apparatus 20 at a rate of 50 kg/hr and is allowed to contact by centrifugal force with a roller 24 having a plurality of pins 22 rotating at a rotational speed of 6800 rpm. At this time, it is thought that the direction of the gas stream inside the impact-type pulverizing apparatus 20 and the AB planes of the untreated material 10 are parallel to each other. The untreated material 10 in the gas stream undergoes impact such that the AB planes of the material are perpendicular to the pins 22 of the roller 24. The untreated material 10 repeatedly impacts a plurality of the pins 22 on the roller 24. As a result of the repeated impact, the AB planes of the untreated material 10 are folded and spheroidized. Here, treatment is repeated 15 times. The untreated material 10 may also be pulverized by the impact, and when it becomes a fine powder, it forms an agglomerate which easily adheres, thereby causing the surface of the untreated material 10 to sometimes appear rough. In this manner, intermediate particles 14 of modified natural graphite particles 16 which have a spherical shape with a certain degree of surface irregularities are obtained.

The intermediate particles 14 are crystals having their AB planes stacked in the c-axis direction. Folding of the stacked AB planes produces a spherical shape. The surface of the particles has a certain degree of irregularity due to the adhesion of fine powder or partial peeling, and the like.

An example of the particle size of the intermediate particles 14 is 5 - 50 $\mu$m as an average particle diameter. An example of the circularity is around 0.94. The intermediate particles 14 have a greater sphericity than the untreated material 10.

Mechanical grinding treatment is carried out on the intermediate particles for rounding the corners of particles and smoothing fine irregularities in the particle surface. For example, an apparatus which repeatedly applies a mechanical action such as compression, friction, or shearing including action caused by interaction of particles can be used.

By way of example, a mechanical grinding apparatus 30 is schematically shown in Figure 1. The mechanical grinding apparatus 30 is an apparatus which compresses a raw material by passing it through a gap between a rotating rotor 32 and an inner piece 34 which is secured to the apparatus, the compressive force providing the apparatus with a function in smoothing the surface of the raw material. Specifically, graphite particles used as a raw material are pressed against the rotor 32 by centrifugal force. The graphite particles are compressed when they pass through the gap between the rotor 32 and the fixed inner piece 34. When the graphite particles are compressed, their surface is smoothed. The graphite particles are agitated during this treatment, resulting in rounded particles having their corners removed. Examples of such a mechanical grinding apparatus 30 which can be used are a powder processing apparatus manufactured by Hosokawa Micron Corporation (Circulating Mechano Fusion System AMS-Lab), a Theta Composer manufactured by Tokuju Corporation, or the like.

The case in which mechanical grinding treatment is carried out using intermediate particles 14 as a raw material will be explained. The intermediate particles 14 in an amount of 600 g are supplied to the container of the apparatus, and they are pressed by centrifugal force against the rotor 32 rotating at 2600 rpm. The pressed intermediate particles 14 are compressed as they pass through the gap between the rotor 32 and the fixed inner piece 34. The treatment time is 15 minutes, and the gap between the rotor 32 and the inner piece 34 is made 5 mm. The intermediate particles 14 tend to be easily compressed parallel to the AB planes, and the particle surface is thereby smoothed. During treatment, the intermediate particles 14 are agitated, whereby the corners of the intermediate particles 14 are rounded. As a result, spherical modified natural graphite particles 16 having their surface smoothed are obtained.

The modified natural graphite particles 16 have a crystal structure with their AB planes stacked in the c-axis direction, and they are spheroidized by folding the stacked AB planes. The surface of the particles is smoothed.

An example of the particle size of the modified natural graphite particles 16 is 5 - 50 $\mu$m in an average particle diameter.

An example of their circularity is around 0.94. They are more spheroidized than the untreated material 10, but their circularity is around the same as that of the intermediate particles 14.

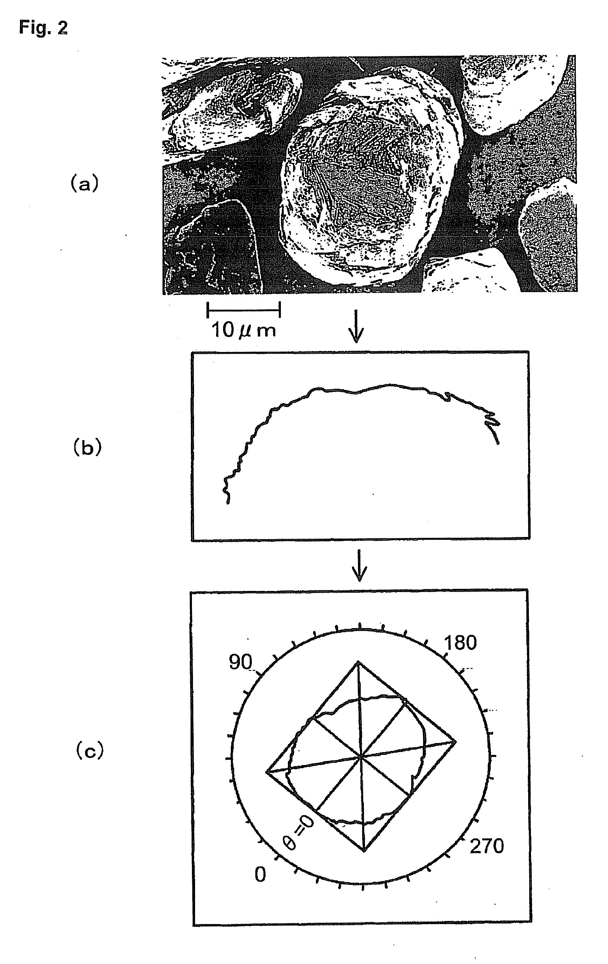

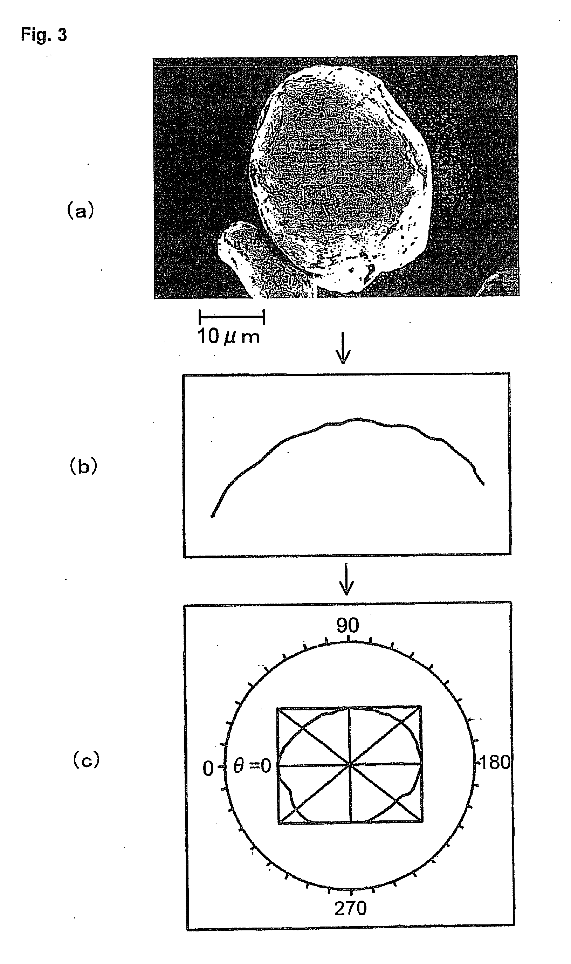

Figure 2 is a diagram for explaining the surface shape of the intermediate particles 14. Figure 3 is a diagram for explaining the surface shape of the modified natural graphite particles 16.

In these figures, (a) is an image of a particle obtained using a scanning electron microscope, and (b) is a schematic illustration of the surface of the resulting image of a particle showing irregularities in the surface.

(c) is a schematic view of the shape of the particle periphery in the resulting image of a particle. A line is drawn along the longest axis of the particle (longest particle axis), and the midpoint of this longest particle axis is made a center point. The length from the center point to any point on the periphery of the particle is made the particle radius r. The position on the periphery of the particle having the largest particle radius r is made a reference position ($\theta = 0°$).

Figure 2(a) shows that on the surface of an intermediate particle 14, adhesion of fine powder, partial peeling, and the like are observed, and that the end faces of the stacked AB planes can be ascertained in some places. As a result, the surface of the intermediate particle is irregular. It can be seen that the overall shape of the intermediate particle 14 has changed from the plate-like shape of the graphite particles before treatment and that spheroidization has been progressed. In Figure 2(b), surface irregularities due to the above-described causes can be ascertained. In addition, Figure 2(c) shows that the overall shape of the particle was generally spherical.

Figure 3(a) shows that the surface of a modified natural graphite particle 16 did not have exposure of the end faces of the AB planes, adhesion of fine powder, peeling, or the like, so it could be ascertained that the particle surface was smoothed. It was also ascertained that the particle shape was spherical caused by folding of the AB planes. Figure 3(b) shows that the surface was smoothed. Figure 3(c) shows that the particle was spherical.

As can be seen by comparing Figure 2 and Figure 3, as stated above, the modified natural graphite particle 16 and the intermediate particle 14 appear to have about the same degree of spheroidization. However, an immediate difference can be observed in surface irregularities. The degree of surface irregularities for each particle can be compared with that of other particles by the below-described method.

First, the distance from the center point C shown in Figure 2(c) or Figure 3(c) to each point $P_i$ on the periphery of the particle was measured as the particle radius $r_i$. As stated previously, the center point C is the point where the longest axis of the particle is divided into two equal parts. The position on the periphery of the particle where the particle radius r is largest was made a reference position $P_0$. The angle between the line segment $CP_0$ connecting this reference point $P_0$ and the center point C and the line segment $CP_i$ from other peripheral points $P_i$ of the particle and the center point C was defined as $\theta$. The particle radius r for every one degree of $\theta$ was determined for a plurality of particles.

The longest axis of the particle was 48 $\mu$m for the untreated material, and it was 35 $\mu$m for the intermediate particle 14 and the modified natural graphite particles 16.

The surface roughness (expressed as a percent), which is an index of the degree of surface irregularities, is determined using the following equation.

$$\text{Surface roughness} = \{(\text{Maximum change in the particle radius r per } 1°)/(\text{Longest axis of the particle})\} \times 100$$

It was found that the surface roughness had the largest value (12.5%) for the untreated material, and that the surface roughness decreased sequentially for the intermediate particle 14 (2.9%) and the modified natural graphite particle 16 (1.4%).

In this manner, a comparison of the intermediate particles 14 and the modified natural graphite particles 16 shows that the longest axis of particle was the same, but the surface roughness decreased from 2.9% to 1.4%. Thus, the modified natural graphite particles 16 had a smoother surface than the intermediate particles 14.

Table 1 summarizes the results of the surface roughness calculated by the above-described procedures and the other results of evaluation. The untreated material, the intermediate particles 14, the modified natural graphite particles 16, and the comparative material will be explained. The comparative material is comprised by particles which were not treated by impact-type pulverization and which were obtained by carrying out only mechanical grinding on the above-described untreated material 10.

Table 1

| | | Longest axis of particle (μm) | Surface roughness (%) | Circularity | Average particle diameter (μm) | Specific surface area (m²/g) | Tap density (g/cm³) | Oil absorption (cm³/100 g) | Peel strength (N/m) | Retention of cycle capacity (%) |
|---|---|---|---|---|---|---|---|---|---|---|
| Modified natural graphite particles | Ex. 1 | 35 | 1.4 | 0.94 | 25.5 | 3.7 | 1.09 | 44.6 | 35 | 90 |
| | Ex. 2 | 18 | 1.4 | 0.93 | 13.9 | 5.9 | 1.00 | 49.5 | 10 | 90 |
| | Ex. 3 | 25 | 1.3 | 0.93 | 19.4 | 5.0 | 1.06 | 41.6 | 43 | 92 |
| | Ex. 4 | 28 | 1.3 | 0.94 | 21.5 | 4.6 | 1.10 | 41.0 | 46 | 93 |
| | Ex. 5 | 38 | 1.3 | 0.94 | 27.1 | 3.2 | 1.06 | 49.3 | 30 | 75 |
| Untreated material | Comp. 1 | 48 | 12.5 | | | | | | | |
| Intermediate particles | Comp. 2 | 35 | 2.9 | 0.94 | 25.4 | 3.7 | 1.04 | 52.2 | 18 | 75 |
| | Comp. 4 | 18 | 2.8 | 0.93 | 13.8 | 5.9 | 0.82 | 69.2 | 0 | 75 |
| | Comp. 5 | 25 | 2.7 | 0.93 | 19.5 | 5.0 | 1.02 | 50.8 | 16 | 80 |
| | Comp. 6 | 28 | 2.7 | 0.94 | 21.8 | 4.6 | 1.06 | 50.2 | 17 | 82 |
| | Comp. 7 | 38 | 3.0 | 0.94 | 26.8 | 3.1 | 1.00 | 55.0 | 22 | 65 |
| Comparative material | Comp. 3 | | | 0.90 | 30.2 | 2.5 | 0.89 | 63.0 | 0 | 60 |

The longest axis of particle, surface roughness, circularity, average particle diameter, specific surface area, tap density, linseed oil absorption, peel strength, and retention of cycle capacity shown in Table 1 were measured in the following manner.

(Longest Axis of Particle)

The longest axis of particle (maximum particle diameter) was measured for 10 particles randomly selected in an image obtained by observing particles at a magnification of 2000x using a scanning electron microscope (SEM), and the average value was determined.

(Surface Roughness)

The surface roughness was measured by the above-described method for 10 particles randomly selected in an image obtained by observing particles at a magnification of 2000x using a scanning electron microscope (SEM), and the average value was determined.

(Circularity)

Circularity was calculated from a stationary image obtained by placing a sample into a measurement system and illuminating a sample stream with a strobe light. Specifically, at least 5000 particles were the subject of measurement. Deionized water to which polyoxyethylene sorbitan monolaurate was added as a surfactant was used as a dispersion medium. The sample was placed in a measurement system, a flat sample stream was formed using the dispersion medium, and the passing particles were photographed as a still image while illuminating the sample stream with a strobe light. The image of the particles was subjected to image analysis, and the diameter of an equivalent circle and the circularity were calculated from the projected area and perimeter. Expressed as an equation, circularity = (Perimeter of a circle having the same area as that of a particle image)/Perimeter of the particle image). Measurement can be carried out using a flow particle image analyzer (FPIA-2100) manufactured by Sysmex Corporation.

(Average Particle Diameter)

The average particle diameter can be determined using the light diffraction/dispersion method. Here, the average particle diameter is the particle diameter at a volume fraction of 50%. Measurement can be carried out using a laser diffraction/dispersion particle size analyzer (LA-910) manufactured by Horiba, Ltd.

(Specific Surface Area)

The specific surface area can be determined by the flowing gas adsorption method and the BET 1-point method. Specifically, the specific surface area can be determined by the BET 1-point method while nitrogen gas is adsorbed on graphite particles by the flowing gas adsorption method. Measurement can be performed using a Quantasorb manufactured by Yuasa Ionics Co., Ltd.

(Tap Density)

The tap density can be determined by packing a vessel having a fixed capacity with graphite particles under predetermined conditions, then carrying out tapping of the vessel, and measuring the volume of the particles after tapping. The tap density was calculated from the volume and the weight of the sample. Specifically, tapping is carried out 180 times using a vessel having a volume capacity of 100 cm$^3$. Measurement can be carried out using a Powder Tester (registered trademark) PT-N manufactured by Hosokawa Micron Corporation.

(Linseed Oil Absorption)

The linseed oil absorption can be determined generally in accordance with JIS K 6217 (2001). Specifically, linseed oil is added at a rate of 4 cm$^3$/min to graphite particles which are being stirred with two blades. The change in the viscosity at this time is detected with a torque sensor, and the output of the torque sensor is converted by a microcomputer into torque. The added amount of linseed oil corresponding to the maximum generated torque is converted to the amount per 100 g of graphite particles to determine the linseed oil absorption. Measurement was carried out using an apparatus manufactured by Asahisouken Co., Ltd. (S-410).

(Peel Strength)

The peel strength can be determined generally in accordance with JIS C 6481. Specifically, a negative electrode plate having a negative electrode mixture applied to a current collector is secured atop a table with double-sided tape so that the negative electrode mixture is facing down. The top surface of the table and the electrode plate are parallel. The current collector is pulled upwards (vertically) with respect to the top surface of the table and is continuously peeled off at a speed of 50 mm/min to peel off 50 mm, and the smallest value of the load during peeling off 50mm is recorded as the peel strength.

From the results shown in Table 1, it can be seen that modified natural graphite particles 16 for a nonaqueous electrolyte secondary battery preferably have a circularity of at least 0.94 and a surface roughness of at most 1.4%. Taking into consideration the significant figures of the circularity and the surface roughness, the circularity of a modified natural graphite particles according to the present invention is made at least 0.93 and the surface roughness is made at most 1.5%.

(Retention of Cycle Capacity)

Next, the results of the evaluation of the retention of cycle capacity shown in Table 1 will be explained. The retention of cycle capacity can be determined in the following manner.

First, graphite particles as a negative electrode active material and polyvinylidene fluoride (PVdF) as a binder are mixed by kneading at a mass ratio of 9 : 1 to obtain a negative electrode mixture. The negative electrode mixture is applied atop a copper foil used as a current collector, and then dried and compacted to obtain a negative electrode. The weight of the negative electrode active material in the negative electrode is calculated from the weight of the negative electrode mixture in the negative electrode and the weight ratio of the negative electrode active material in the negative electrode mixture and is made the weight of the negative electrode active material contained in the battery. The surface density of the negative electrode mixture layer on the current collector is 9 mg/cm$^2$ and its volume density is 1.6 g/cm$^3$.

Next, the above-described negative electrode and a counter electrode in the form of a lithium metal foil are placed in a coin-shaped battery case. A polyethylene porous insulating layer is interposed between the negative electrode and the counter electrode, and an electrolytic solution is poured into the case. The electrolytic solution contains lithium hexafluorophosphate (LiPF$_6$) as an electrolyte and ethylene carbonate (EC) and ethyl methyl carbonate (EMC) as solvents. The concentration of LiPF$_6$ salt in the electrolytic solution is adjusted to 1M (1 mol/L), and the volume ratio of EC to EMC in the solvent is adjusted to 1 : 3. The battery case is then sealed to obtain a battery. Here, the working electrode will be referred to as a negative electrode in all cases.

The battery which is obtained in the above-described manner is subjected to a charge and discharge test to evaluate the charge capacity and the retention of cycle capacity. Discharge is carried out by performing constant-current discharge until a predetermined inter-electrode voltage is reached, and after the predetermined inter-electrode voltage is reached, constant-voltage discharge is performed until a predetermined current density is reached. Charge is carried out by performing constant-current charge until a predetermined inter-electrode voltage is reached. Charge and discharge are repeatedly performed in order to evaluate the charge capacity and the retention of cycle capacity.

The charge and discharge test is carried out at an ambient temperature of 23° C. At the time of discharge, constant-current discharge at a current density of 1 mA/cm$^2$ is performed until the inter-electrode voltage reaches 5 mV, and after this inter-electrode voltage is reached, constant-voltage discharge is performed until the current density reaches 0.01 mA/cm$^2$. At the time of charge, constant-current charge is carried out at a current density of 1 mA/cm$^2$ until the inter-electrode voltage reaches 1.5 V. The integral of the charge time (h) and the current per 1 gram of mass of the negative electrode active material (mA/g) is made the charge capacity (mAh/g).

This charge and discharge test is repeated for 50 cycles, and the value of (charge capacity on the 50th cycle/ charge capacity on the 2nd cycle) x 100 is made the retention of cycle capacity (%).

Table 1 shows the results of evaluation in which the number of samples, which are divided into examples and comparative examples, is increased.

(Example 1)

Example 1 illustrates the above-described modified natural graphite particles 16.

(Comparative Example 1)

Comparative Example 1 illustrates the above-described untreated material 10.

(Comparative Example 2)

Comparative Example 2 illustrates the above-described intermediate particles 14.

(Comparative Example 3)

Comparative Example 3 illustrates a comparative material which was obtained by carrying out only mechanical grinding treatment on the above-described untreated material 10 without impact-type pulverizing treatment.

(Comparative Examples 4 - 7)

Comparative Examples 4 - 7 were obtained by the same manufacturing process as for the above-described intermediate particles 14. They are for the purpose of explaining the case in which particles having a different average particle diameter were used. Particles having a different average particle diameter can be obtained by varying the rotational speed of the impact-type pulverizing apparatus.

(Examples 2 - 5)

Examples 2 - 5 were obtained by the same manufacturing process as for the above-described modified natural graphite particles 16. They are for the purpose of explaining the use of a different average particle diameter (using the above-described preparation method). Example 2 was obtained by treating the particles of Comparative Example 4 using the mechanical grinding apparatus 30. In the same manner, Examples 3 corresponds to Comparative Example 5, Example 4 corresponds to Comparative Example 6, and Example 5 corresponds to Comparative Example 7.

No significant differences were observed in the circularity, the average particle diameter, and the specific surface area between Examples 2 - 5 and the corresponding Comparative Examples 4 - 7.

With respect to tap density, comparison of Examples 2 - 5 with corresponding Comparative Examples 4 - 7 shows that the tap density was increased in Examples 1 - 5. The tap density is preferably at least 1.0 g/cm$^3$.

With respect to oil absorption, comparison of Examples 2 - 5 with corresponding Comparative Examples 4 - 7 shows that the oil absorption was decreased in each of Examples 1 - 5. The oil absorption is preferably at most 50 cm$^3$/100 g.

Comparing Examples 2 - 5 and corresponding Comparative Examples 4 - 7 with respect to peel strength, it can be seen that the peel strength was increased for each of Examples 1 - 5.

Comparing Examples 2 - 5 and corresponding Comparative Examples 4 - 7 with respect to the retention of cycle capacity, it can be seen that the retention of cycle capacity was increased for each of Examples 1 - 5.

From the above results, it was ascertained that modified natural graphite particles having a circularity of at least 0.93 and a surface roughness of at most 1.5% are preferred.

In the above examples, modified natural graphite particles 16 were used as a negative electrode material. Below, the case was investigated in which a carbonaceous material in the form of low crystalline carbon was adhered to the surface of the above-described modified natural graphite particles 16.

(Example 6)

The modified natural graphite particles of Example 4 were mixed with 20 mass% of coal-derived pitch powder having an average particle diameter of 20 $\mu$m, and the mixture was subjected to heat treatment under a nitrogen gas stream for one hour at 1000° C. During this heat treatment, the pitch powder melted and wet the surface of the modified natural graphite particles and subsequently it underwent carbonization to turn into a carbonaceous material in the form of low crystalline carbon. In this manner, a material having a carbonaceous material adhering to the surface of the modified natural graphite particles was obtained.

(Comparative Example 8)

The intermediate particles of Comparative Example 6 were mixed with 20 mass % of coal-derived pitch powder having an average particle diameter of 20 $\mu$m, and the mixture was subjected to heat treatment under a nitrogen gas stream for one hour at 1000° C. In the same manner as in Example 6, the pitch powder turned into a carbonaceous material in the form of low crystalline carbon. In this manner, a material having a carbonaceous material adhering to the surface of the intermediate particles was obtained.

Table 2 shows the results of the case where a carbonaceous material in the form of low crystalline carbon was allowed to adhere to the surface of graphite particles. The methods for evaluation were the same as those explained with respect to Table 1 except for evaluation of peel strength in which graphite particles used as a negative electrode material (the graphite particles of Example 6 or Comparative Example 8) and PVdF used as a binder were mixed by kneading at a mass ratio of 95 : 5.

Table 2

| | Average particle diameter (μm) | Specific surface area (m$^2$/g) | Tap density (g/cm$^3$) | Oil absorption (cm$^3$/100 g) | Peel strength (N/m) |
|---|---|---|---|---|---|
| Example 6 | 22.5 | 0.5 | 1.32 | 26.6 | 94 |
| Comparative Example 8 | 22.5 | 0.5 | 1.20 | 35.0 | 42 |

A comparison of Example 6 and Comparative Example 8 shows that Example 6 had a higher tap density, a smaller oil absorption, and a higher peel strength. This result confirmed that when a carbonaceous material in the form of low crystalline carbon is allowed to adhere to the surface of graphite particles, the same shape modification processing as in the manufacturing process for modified natural graphite particles 16 is effective.

Example 7 and Comparative Example 9 were obtained under the same processing conditions as in Example 6 and Comparative Example 8 except that a decreased amount of a carbonaceous material in the form of low crystalline carbon was adhered.

(Example 7)

Particles of Example 3 were mixed with 2 mass % of coal-derived pitch powder having an average particle diameter of 20 μm, and the mixture was subjected to heat treatment in a nitrogen gas stream at 1000° C for one hour. As in Example 6, during this heat treatment, the pitch powder melted and wet the surface of the modified natural graphite particles, and subsequently it carbonized to turn into a carbonaceous material in the form of low crystalline carbon. In this manner, a material having a carbonaceous material adhering to the surface of modified natural graphite particles was obtained.

(Comparative Example 9)

Particles of Comparative Example 5 were mixed with 2 mass % of coal-derived pitch powder having an average particle diameter of 20 μm, and the mixture was subjected to heat treatment in a nitrogen gas stream at 1000° C for one hour. As in Example 6, during this heat treatment, the pitch powder turned into a carbonaceous material in the form of low crystalline carbon. In this manner, a material having a carbonaceous material adhering to the surface of intermediate particles was obtained.

Table 3 shows the results of adhesion of a carbonaceous material in the form of low crystalline carbon to the surface of particles under different conditions from Table 2. The methods for evaluation were the same as those explained with respect to Table 1 except for evaluation of peel strength in which graphite particles used as a negative electrode material (the graphite particles of Example 7 or Comparative Example 9), styrene-butadiene rubber (SBR) used as a binder, and carboxymethylcellulose (CMC) used as a thickener were mixed by kneading at a mass ratio of 98 : 1 : 1.

Table 3

| | Average particle diameter (μm) | Specific surface area (m$^2$/g) | Tap density, (g/cm$^3$) | Oil absorption (cm$^3$/100g) | Peel strength (N/m) |
|---|---|---|---|---|---|
| Example 7 | 19.5 | 3.9 | 1.20 | 38.0 | 30 |
| Comparative Example 9 | 19.5 | 3.9 | 1.10 | 46.0 | 18 |

A comparison of Example 7 and Comparative Example 9 shows that Example 7 had a higher tap density, a smaller oil absorption, and a higher peel strength. As a result, it can be ascertained that even when adhesion of a carbonaceous material in the form of low crystalline carbon is carried out under different conditions from Table 2, the same shape modification processing as in the manufacturing process for modified natural graphite particles 16 is effective. In addition, in the results shown in Table 3 using an aqueous binder, the effect of carrying out particle shape modification by the combination of impact-type pulverization and mechanical grinding can be ascertained in the same manner as for the results using an organic solvent-type binder shown in Tables 1 and 2. As shown in Table 1, Table 2, and Table 3, the tap density is preferably at least 1.0 g/cm$^3$ and at most 1.4 g/cm$^3$. The oil absorption is preferably at least 20 cm$^3$/100 g and at most 50 cm$^3$/100 g.

From the above, it can be seen that modified natural graphite particles obtained in the above-described manner are useful when carrying out adhesion of a carbonaceous material in the form of low crystalline carbon. In addition, the particles are useful when using an organic solvent-type binder or an aqueous binder.

Industrial Applicability

Modified natural graphite particles for a nonaqueous electrolyte secondary battery according to the present invention are useful as modified natural graphite particles for a lithium ion secondary battery.

Explanation of Symbols

10: untreated material, 14: intermediate particles, 16: modified natural graphite particles, 20: impact-type pulverizing apparatus, 22: pin, 24: roller, 30: mechanical grinding apparatus, 32: rotor, 34: inner piece

**Claims**

1. Modified natural graphite particles **characterized by** having a circularity of at least 0.93 and at most 1.0 and a surface roughness of at most 1.5%.

2. Modified natural graphite particles as set forth in claim 1 which have:

   a true specific gravity of at least 2.25,
   a tap density of at least 1.0 g/cm$^3$ and at most 1.4 g/cm$^3$, and
   a linseed oil absorption of at least 20 cm$^3$/100 g and at most 50 cm$^3$/100 g.

3. Modified natural graphite particles comprising the modified natural graphite particles set forth in claim 1 or claim 2 and a carbonaceous material adhering to at least a portion of the surface of the particles.

4. A negative electrode active material for a lithium ion secondary battery **characterized by** comprising modified natural graphite particles as set forth in any of claims 1 - 3.

5. A method for manufacturing modified natural graphite particles as set forth in claim 1 or claim 2 comprising:

   a step of applying an impact force to natural graphite particles to carry out pulverization and spheroidization, thereby obtaining intermediate particles having a circularity of at least 0.93 and at most 1.0, and
   a step of carrying out surface smoothing on the intermediate particles by mechanical grinding treatment, thereby obtaining the modified natural graphite particles.

6. A method for manufacturing modified natural graphite particles as set forth in claim 3 comprising:

   a step of applying an impact force to natural graphite particles to carry out pulverization and spheroidization, thereby obtaining intermediate particles having a circularity of at least 0.93 and at most 1.0,
   a step of carrying out surface smoothing on the intermediate particles by mechanical grinding treatment, and
   a step of adhering a carbonaceous material to at least a portion of the surface of the particles after the mechanical grinding treatment to obtain the modified natural graphite particles.

**Fig. 1**

**Fig. 2**

(a)

10 μ m

(b)

(c)

**Fig. 3**

(a)

10 μm

(b)

(c)

## INTERNATIONAL SEARCH REPORT

| | International application No. |
|---|---|
| | PCT/JP2011/057539 |

### A. CLASSIFICATION OF SUBJECT MATTER
*C01B31/04*(2006.01)i, *H01M4/36*(2006.01)i, *H01M4/587*(2010.01)i

According to International Patent Classification (IPC) or to both national classification and IPC

### B. FIELDS SEARCHED

Minimum documentation searched (classification system followed by classification symbols)
C01B31/04, H01M4/36, H01M4/587

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-169160 A  (Mitsubishi Chemical Corp.),<br>05 July 2007 (05.07.2007),<br>claims 1, 5; paragraphs [0019], [0035], [0041]<br>(Family: none) | 1,3,4<br>2,5,6 |
| Y<br>A | JP 2004-210634 A  (JFE Chemical Corp.),<br>29 July 2004 (29.07.2004),<br>claim 1; paragraphs [0061] to [0062]<br>& WO 2004/056703 A1      & TW 243498 B<br>& KR 10-2005-0084413 A   & CN 1726168 A | 1,3,4<br>2,5,6 |
| Y<br>A | JP 2004-185989 A  (Hitachi Chemical Co., Ltd.),<br>02 July 2004 (02.07.2004),<br>paragraphs [0024] to [0025]<br>(Family: none) | 1,3,4<br>2,5,6 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 June, 2011 (08.06.11) | 21 June, 2011 (21.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/057539 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-45715 A  (Matsushita Electric Industrial Co., Ltd.), 16 February 1999 (16.02.1999), claims 1, 6; paragraphs [0018], [0031]; tables 2 to 4 & US 6455199 B1          & EP 935306 A1 & WO 1998/054780 A1      & ID 21573 A & KR 10-2000-0029651 A   & CN 1227003 A | 2 |
| A | JP 2008-204886 A  (Matsushita Electric Industrial Co., Ltd.), 04 September 2008 (04.09.2008), claims (Family: none) | 2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007169160 A
- JP 11263612 A
- JP 2003238135 A
- JP 2008024588 A

**Non-patent literature cited in the description**

- **OHZEKI.** *Tanso,* 2005, vol. 217, 99-103